# FASCICULE DE BREVET EUROPEEN

(11) **EP 2 426 807 B1**
(45) Date de publication et mention de la délivrance du brevet: **31.10.2018**
(21) Numéro de dépôt: 11179950.8
(22) Date de dépôt: 02.09.2011
(51) Int. Cl.: H02J 7/00

(54) **Protection d'une batterie en couches minces**
Schutz einer Dünnschichtbatterie
Thin-film battery protection

(30) Priorité: 07.09.2010 FR 1057104
(43) Date de publication de la demande: 07.03.2012
(73) Titulaire: STMicroelectronics (Tours) SAS, 37100 Tours (FR)
(72) Inventeur: Cantin, Frédéric, 37000 Tours (FR)
(74) Mandataire: Cabinet Beaumont

(56) Documents cités:
- EP-A2- 1 280 252
- EP-A2- 2 124 312
- US-A- 6 166 522
- US-A1- 2002 163 338
- US-B1- 6 359 441
- US-B1- 6 566 844

## Description

### Domaine de l'invention

La présente invention concerne un système de protection d'une batterie en couches minces.

### Exposé de l'art antérieur

La tension aux bornes d'une batterie en couches minces, à titre d'exemple de type à ions lithium, décroît au cours de son fonctionnement pour atteindre une tension critique en dessous de laquelle la batterie se dégrade de manière irréversible. Il faut donc arrêter de décharger la batterie et la recharger avant qu'elle n'atteigne cette tension critique.

On s'intéresse ici à des batteries en couches minces utilisées dans des systèmes à fonctionnement intermittent, par exemple des batteries alimentant des capteurs autonomes qui communiquent périodiquement (régulièrement ou non) des informations. Dans de tels systèmes, des périodes d'activité très courtes alternent avec des périodes d'inactivité, qui peuvent être longues. De plus, la technologie à couches minces employée pour les batteries implique une forte résistance interne de ces batteries par rapport aux autres batteries.

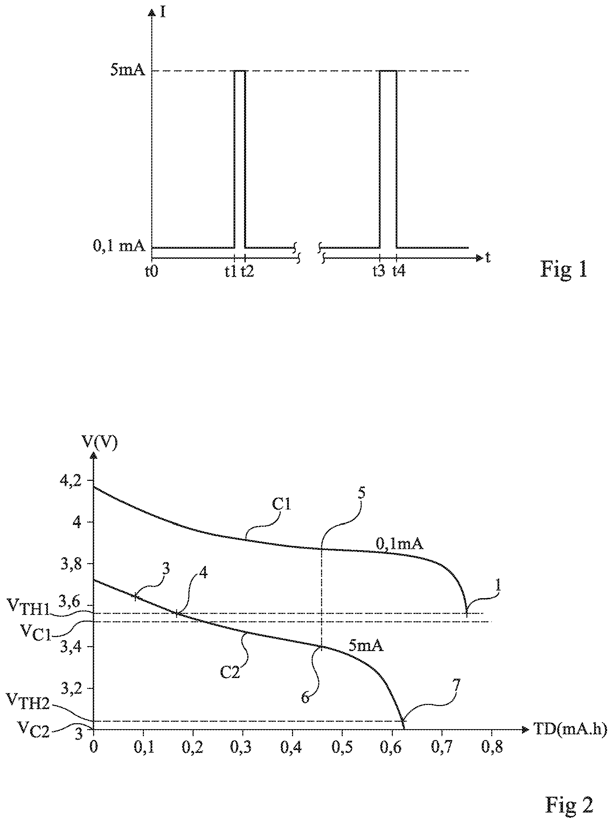

La figure 1 est un graphique représentant, en fonction du temps t, le courant I fourni par une batterie alimentant un tel capteur. Des pics de courant de forte amplitude (par exemple 5 mA) et de brève durée, inférieure à une demi milliseconde, sont espacés par de longues périodes, de quelques secondes à plusieurs heures pendant lesquelles le courant a une très faible amplitude (par exemple 0,1 mA). Entre des instants t0 et t1, la charge intermittente est inactive. La charge intermittente est active entre les instants t1 et t2 et entre les instants t3 et t4. La non nullité du courant lors des périodes inactives est par exemple due au fait que, pendant ces périodes, la batterie est utilisée pour alimenter un microcontrôleur basse consommation.

On a proposé des systèmes de protection de batteries, détectant le moment où celles-ci approchent de leur tension critique mais, comme on l'exposera ci-après, ces systèmes ne sont pas adaptés à des batteries en couches minces à fonctionnement intermittent.

Par exemple, le document US 6.166.522 concerne une batterie en couche épaisse qui se dégrade si elle n'est pas suffisamment déchargée avant d'être rechargée. Dans le dispositif de US 6.166.522, on cherche à s'assurer, avant que la batterie ne soit chargée, que la tension aux bornes de la batterie est inferieure a un seuil donne. Si ce n'est pas le cas, on utilise un fonctionnement à courant de décharge élevé pour décharger la batterie. Ce fonctionnement a courant de décharge élevé est utilisé au moment où l'on envisage de recharger la batterie et non pas périodiquement au cours du fonctionnement.

### Résumé

Un objet d'un mode de réalisation de la présente invention est de prévoir un procédé et un dispositif de protection de batterie, adapté à une batterie en couches minces reliée à une charge à fonctionnement intermittent.

Selon l'invention, ce but est atteint avec un procédé de protection de batterie et un dispositif de de protection de batterie avec les caractéristiques techniques des revendications 1 et 5 respectivement. Ainsi, un mode de réalisation de la présente invention prévoit un procédé de protection d'une batterie en couches minces reliée à une charge intermittente comprenant les étapes consistant à faire fonctionner périodiquement la batterie à son courant de décharge maximal, et déconnecter la batterie dès que la tension à ses bornes atteint une valeur de seuil supérieure à sa tension critique pour ledit courant de décharge maximal.

Selon un mode de réalisation de la présente invention, le fonctionnement périodique présente un rapport cyclique inférieur à 0,1 %.

Selon un mode de réalisation de la présente invention, la durée de chaque phase du fonctionnement périodique est inférieure à 10 ms.

Selon un mode de réalisation de la présente invention, la période du fonctionnement périodique est inférieure à 10 minutes.

Un mode de réalisation de la présente invention prévoit également un dispositif de protection d'une batterie en couches minces reliée à une charge intermittente comprenant une charge commutable apte à faire fonctionner périodiquement la batterie à son courant de décharge maximal, et un comparateur de tension adapté à comparer la tension aux bornes de la batterie à une valeur de seuil supérieure à la tension critique de la batterie pour ledit courant de décharge maximal.

Selon un mode de réalisation de la présente invention, la charge commutable est commandée par des premiers moyens de commutation dont le rapport cyclique est inférieur à 0,1 %.

Selon un mode de réalisation de la présente invention, les premiers moyens de commutation sont adaptés à former un signal en créneaux de largeur inférieure à 10 ms.

Selon un mode de réalisation de la présente invention, les premiers moyens de commutation sont adaptés à former un signal dont la période est inférieure à 10 minutes.

Selon un mode de réalisation de la présente invention, le dispositif comprend un condensateur tampon en parallèle sur la charge intermittente.

Selon un mode de réalisation de la présente invention, le dispositif comprend des deuxièmes moyens de commutation disposés entre l'ensemble comprenant la batterie et la charge commutable et l'ensemble comprenant le condensateur tampon et la charge intermittente.

Selon un mode de réalisation de la présente invention, la charge commutable est une source de courant.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un graphique représentant un exemple du courant fourni par une batterie alimentant une charge intermittente ;
la figure 2 est un graphique représentant la tension aux bornes d'une batterie en fonction de son taux de décharge pour deux valeurs de courant de décharge ;
la figure 3 illustre un exemple de montage d'une batterie alimentant une charge intermittente muni d'un système de protection de la batterie ;
la figure 4 est un graphique similaire à celui de la figure 2 sur lequel est illustrée l'évolution de la tension aux bornes d'une batterie connectée de la façon illustrée en figure 3 ;
la figure 5A est un graphique représentant un exemple du courant fourni par une batterie alimentant une charge intermittente particulière ; et
la figure 5B est un graphique similaire à celui de la figure 2 illustrant l'évolution de la tension aux bornes d'une batterie fournissant le courant de la figure 5A.

### Description détaillée

Les inventeurs ont étudié le fonctionnement d'une batterie susceptible de fournir des courants alternativement fort et faible et recherché des solutions pour optimiser l'utilisation d'une telle batterie.

La figure 2 est un graphique représentant la tension V aux bornes d'une batterie particulière à ions lithium en fonction de son taux de décharge TD pour deux valeurs du courant de décharge, respectivement 0,1 et 5 mA. Le taux de décharge est nul lorsque la batterie est totalement chargée. Il augmente au cours du fonctionnement de la batterie et ne doit jamais atteindre une valeur maximale sous peine de détérioration irréversible de la batterie. Pour un courant de décharge de 0,1 mA, la tension décroit d'une tension initiale de 4,2 V jusqu'à une tension critique V_{C1} de 3,6 V. Pour un courant de décharge de 5 mA, la tension décroit d'une tension initiale de 3,75 V jusqu'à une tension critique V_{C2} de 3 V.

Ainsi, lorsque la batterie est connectée à une charge intermittente dont le courant varie de la façon illustrée en figure 1, le point de fonctionnement suit la courbe C1 en période d'inactivité de la charge et suit la courbe C2 en période d'activité de la charge. Étant donné que la batterie peut avoir de longues périodes d'inactivité, il est possible que le point de fonctionnement se déplace constamment sur la courbe C1 jusqu'au point 1 de cette courbe correspondant à une tension V_{TH1} légèrement supérieure à la tension V_{C1}. Pour éviter que la batterie ne passe dans un état de détérioration irréversible, il faut déconnecter celle-ci dès que le point 1 est atteint. On est donc amené à comparer en permanence la tension aux bornes de la batterie à une tension de seuil V_{TH1} légèrement supérieure à V_{C1} et à assurer une déconnexion dès que le seuil est atteint.

Ce choix d'un seuil V_{TH1} légèrement supérieur à V_{C1} présente un inconvénient majeur pour la batterie quand elle fonctionne à son courant de décharge maximal. Si, en période d'activité de la charge, la batterie se décharge à partir d'un point 3 de la courbe C2, dès que l'on atteint un point 4 correspondant à la tension V_{TH1}, la batterie est déconnectée. De même, si la batterie est à un point de fonctionnement 5 de la courbe C1, et que la charge produit un appel de courant qui devrait faire passer le point de fonctionnement au point 6 de la courbe C2, la batterie est déconnectée puisque la tension aux bornes de la batterie, pour le point 6, serait inférieure à V_{TH1}. Ainsi, pour un fonctionnement à courant maximal, la batterie est déconnectée au niveau du point 4 alors qu'elle contient encore une grande quantité d'énergie. On ne peut jamais atteindre le point 7 de la courbe C2 correspondant à une tension V_{TH2} légèrement supérieure à la tension critique V_{C2} pour ce mode de fonctionnement.

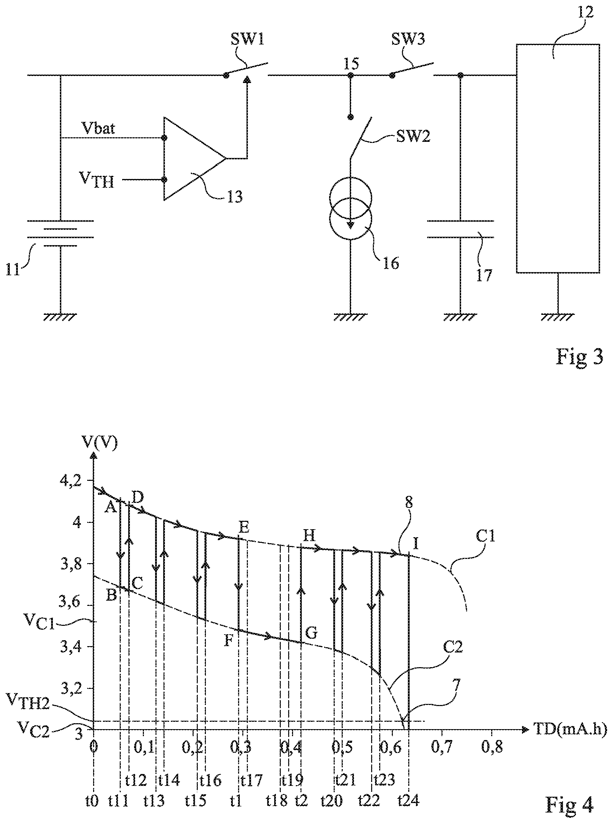

La figure 3 illustre un exemple de montage d'une batterie alimentant une charge intermittente, ce montage étant muni d'un système de protection de la batterie. Une batterie 11 alimente une charge intermittente 12. Un comparateur de tension 13 compare la tension aux bornes de la batterie à un seuil V_{TH}. Ce comparateur est relié à la borne de commande d'un interrupteur SW1 dont une première borne est connectée à la batterie 11 et une seconde borne à un noeud 15. Le noeud 15 est relié par un interrupteur SW2 à une charge 16, ci-après appelée charge commutable, et par un interrupteur SW3 à une première borne d'un condensateur tampon 17 et à la charge 12.

Le montage illustré en figure 3 est prévu pour fonctionner selon l'un ou l'autre de deux modes. Ces deux modes se succèdent périodiquement jusqu'à la déconnexion de la batterie 11.

Dans un premier mode, les interrupteurs SW1 et SW3 sont fermés et l'interrupteur SW2 est ouvert. En période inactive de la charge 12, la batterie 11 charge brièvement le condensateur tampon 17 puis alimente un microcontrôleur (non représenté) sous un courant de 0,1 mA. En période active de la charge 12, la batterie 11 et le condensateur tampon 17 alimentent la charge 12, le condensateur étant dimensionné pour fournir l'essentiel du courant pic à la charge et limiter le pic de courant demandé à la batterie (ici à 5 mA). C'est la forte résistance interne de la batterie qui empêcherait celle-ci de fournir un courant plus fort.

Dans un second mode, dit de fonctionnement forcé, l'interrupteur SW1 est fermé, l'interrupteur SW2 est brièvement fermé et l'interrupteur SW3 brièvement ouvert. La charge commutable 16 force la batterie à fonctionner à son courant de décharge maximal de 5 mA. Dans une période d'activité, la charge 12 reste alimentée par le condensateur tampon 17.

La figure 4 est un graphique similaire à celui de la figure 2 sur lequel est illustrée l'évolution de la tension aux bornes d'une batterie connectée dans un montage du type de celui de la figure 3 dont la charge intermittente 12 présente une activité correspondant au courant illustré en figure 1.

A un instant initial t0, la batterie 11 est totalement chargée et la tension à ses bornes est de 4,2 V. En effet le courant de décharge est de 0,1 mA puisque la charge 12 n'est pas active, comme cela est illustré en figure 1. Les interrupteurs SW1 et SW3 sont fermés, l'interrupteur SW2 ouvert. Le condensateur 17 se charge et la tension aux bornes de la batterie décroit selon la courbe C1.

A un instant t11, l'interrupteur SW2 est brièvement fermé tandis que l'interrupteur SW3 est ouvert. L'interrupteur SW1 reste fermé. La charge 16 force la batterie 11 à fonctionner à 5 mA. La tension aux bornes de la batterie 11 chute verticalement du point A de la courbe C1 jusqu'au point B de la courbe C2. On se déplace ensuite sur la courbe C2 du point B au point C correspondant à un instant t12. A l'instant t12, l'interrupteur SW2 est ouvert et l'interrupteur SW3 est fermé. La charge 12 étant inactive, la valeur du courant de décharge de la batterie 11 passe de 5 mA à 0,1 mA, du point C de la courbe C2 au point D de la courbe C1.

Ce bref aller et retour entre les courbes C1 et C2 de la tension aux bornes de la batterie est réitéré à des instants t13 et t15. Les instants t11, t13 et t15 sont de préférence régulièrement espacés. Les intervalles de temps t11 à t12, t13 à t14 et t15 à t16, durant lesquels la charge 16 force le fonctionnement de la batterie 11 à un courant de décharge de 5 mA sont brefs et de préférence égaux.

A l'instant t1, défini en figure 1, la charge intermittente 12 entre en activité. Le courant fourni par la batterie 11 passe de 0,1 mA à 5 mA. Le point de fonctionnement passe du point E de la courbe C1 au point F de la courbe C2. Entre les instants t1 et t2, le courant fourni par la batterie est égal à 5 mA. Le point de fonctionnement passe du point F au point G de la courbe C2. A l'instant t2, le courant fourni par la batterie 11 passe de 5 mA à 0,1 mA. Le point de fonctionnement passe du point G au point H de la courbe C1.

Puisque la charge 16 amène périodiquement la batterie à un fonctionnement forcé à un courant de décharge de 5 mA, des itérations de ce fonctionnement forcé sont susceptibles de se produire entre les instants t1 et t2. Dans l'exemple représenté une première itération se produit sensiblement à l'instant t1 et se termine à un instant t17, et une seconde débute à un instant t18 et se termine à un instant t19. Comme on l'a vu précédemment ces itérations n'ont pas d'influence sur l'alimentation de la charge 12 en raison de la présence du condensateur tampon 17.

Après l'instant t2, la charge 12 reste inactive, le point de fonctionnement de la batterie se déplace sur la courbe C1 hormis durant les intervalles de temps de t20 à t21 et de t22 à t23. Ces intervalles de temps correspondent à deux itérations du fonctionnement forcé.

A un instant t24, une nouvelle itération du fonctionnement forcé débute. La batterie 11 tente alors de fonctionner à un courant de décharge de 5 mA. Le point de fonctionnement ne peut passer d'un point I de la courbe C1 à un point de la courbe C2, sans que la tension aux bornes de la batterie ne devienne inférieure à une tension V_{TH2} légèrement supérieure à V_{C2}. La décharge de la batterie est interrompue en ouvrant l'interrupteur SW1 dès que la tension aux bornes de la batterie est égale à la tension V_{TH2}.

Il est à noter que, dans notre exemple des batteries à couches minces pour capteurs autonomes, un système de récupération d'énergie (de chaleur, de vibration, de rayonnement, de lumière) vient charger la batterie de façon intermittente (quand la source d'énergie est disponible). C'est ce système (non représenté ici) qui reconnecte automatiquement la batterie qui s'est mise en sécurité à l'instant t24, quand la source d'énergie est à nouveau disponible.

Cette reconnexion automatique ne met pas en danger la batterie déchargée en t24 car l'apport d'énergie ne peut que faire monter sa tension, et l'éloigner du seuil V_{TH2}.

Ainsi, on prévoit ici, de soumettre une batterie à des itérations répétées de fonctionnement à fort courant et de choisir comme tension de seuil V_{TH}, une valeur V_{TH2} légèrement supérieure à la tension critique V_{C2} correspondant à un fonctionnement à fort courant. Ce choix d'un seuil V_{TH2} supérieur à V_{C2} présente un avantage majeur pour la batterie quand elle fonctionne à son courant de décharge maximal. En effet, la batterie est déconnectée seulement au point de fonctionnement 7, c'est-à-dire lorsque l'intégralité de l'énergie disponible dans la batterie pour un courant de 5 mA a été utilisée.

La périodicité du fonctionnement forcé est choisie courte de sorte que le point I susmentionné ne soit pas très éloigné du point 8 de la courbe C1, situé à la verticale du point 7 de la courbe C2, et de sorte que ce point I soit très éloigné du point extrême de la courbe C1 correspondant à la tension critique à faible courant. Dans l'exemple illustré en figure 4, la batterie peut fournir un courant de 0,1 mA pendant plus d'une heure lorsque le point de fonctionnement se déplace sur la courbe C1 du point 8 au point extrême. On ne risque pas d'atteindre ce point extrême si la périodicité du fonctionnement forcé est choisie largement inférieure à une heure, par exemple de l'ordre d'une dizaine de minutes.

De plus la durée du fonctionnement forcé sera choisie brève afin de minimiser la consommation électrique induite par les nombreuses itérations du fonctionnement forcé.

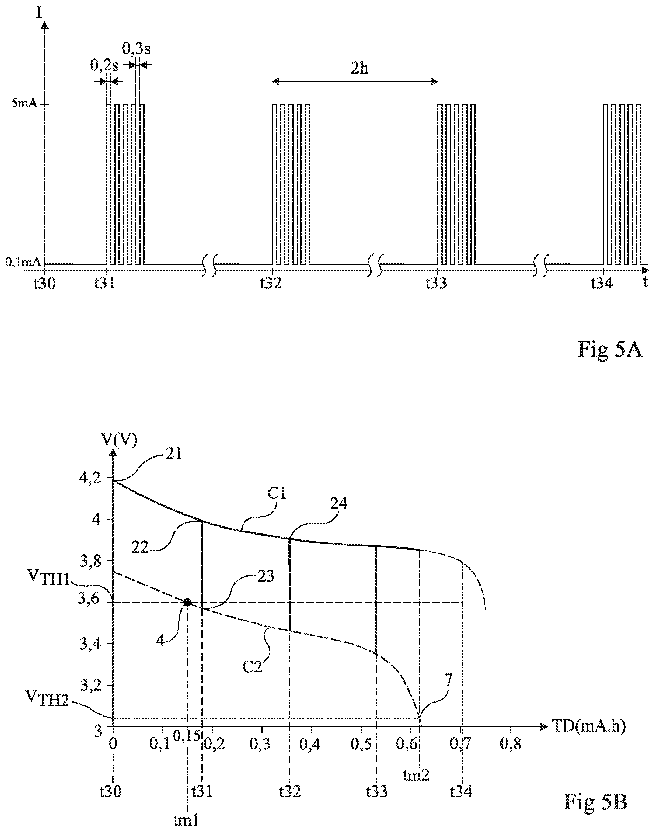

La figure 5A représente un exemple de l'allure du courant I en fonction du temps t, liée au couplage d'une batterie et d'une source intermittente particulière.

Entre des instants t30 et t31, la charge est inactive. A partir de l'instant t31, cinq impulsions de courant d'une durée de 0,2 s chacune sont espacées de 0,3 s. Puis, jusqu'à un instant t32 égal à t31 plus deux heures, le courant reste bas. A l'instant t32 et à des instants ultérieurs t33=t32+2h et t34=t33+2h débutent des nouveaux groupes de cinq impulsions identiques à celles correspondant à l'instant t1. Entre les impulsions de courant de 5 mA, le courant est égal à 0,1 mA.

La figure 5B est un graphique similaire à celui de la figure 2 sur lequel est illustrée l'évolution de la tension aux bornes d'une batterie connectée à la charge intermittente pour laquelle le courant est décrit en figure 5A.

Entre les instants t30 et t31, le point de fonctionnement de la batterie passe d'un point 21 à un point 22 de la courbe C1 correspondant à l'instant.

Le point de fonctionnement tend alors à passer du point 22 de la courbe C1 à un point 23 de la courbe C2.

Avec le procédé selon lequel la tension de seuil est choisie égale à V_{TH1}, il est impossible d'atteindre ce point 23, qui se trouve à droite du point 4 décrit en relation avec la figure 2. La batterie est déconnectée au point 23 sans avoir jamais alimenté la charge intermittente, alors qu'elle contient encore de l'énergie. Pour que la batterie alimente la charge intermittente avec un courant de 5 mA, il eut fallu que l'instant t1 précède un instant tm1 correspondant au point 4 de la courbe C2 pour lequel la tension aux bornes de la batterie est égale à V_{TH1}.

Par contre, si on prévoit de la façon décrite ci-dessus des phases de fonctionnement forcé et une tension de seuil égale à V_{TH2}, le fonctionnement de la batterie peut se poursuivre. Le point de fonctionnement de la batterie effectue cinq allers et retours (non représentés) entre la courbe C1 et la courbe C2 correspondant aux cinq impulsions de courant de 5 mA. Puis le point de fonctionnement de la batterie suit la courbe C1 jusqu'à un point 24 correspondant à l'instant t32. Aux instants t32 et t33, le point de fonctionnement de la batterie réalise à nouveau cinq allers et retours entre la courbe C1 et la courbe C2. A l'instant t4, le point de fonctionnent de la batterie ne peut pas passer sur la courbe C2 car on se trouve alors nettement à droite du point 7 susmentionné et la batterie aura été déconnectée.

Dans ce cas, la batterie alimente la charge intermittente durant 3 groupes de 5 impulsions de courant. La batterie est déconnectée seulement lorsque l'intégralité de l'énergie disponible pour un courant de 5 mA a été utilisée.

Bien entendu, la présente invention est susceptible de nombreuses variantes.

La batterie n'est pas nécessairement une batterie à ions lithium ni même à couches minces. Le système de protection de batterie proposé ici s'applique à toute batterie à forte impédance interne dont la décharge a l'allure illustrée en figure 2 et qui présente une tension critique en deçà de laquelle peut se produire une dégradation irréversible.

La batterie peut ne pas être déconnectée immédiatement lorsque la valeur de seuil est atteinte. Elle peut, par exemple, alimenter un avertisseur sonore ou visuel indiquant qu'elle doit être rechargée.

La charge commutable peut être une source de courant, et plus particulièrement un miroir de courant.

Le condensateur tampon, qui a pour fonction d'alimenter la charge intermittente durant le fonctionnement forcé, et de limiter la valeur du courant de décharge maximal de la batterie pendant les périodes d'activité de la charge intermittente, peut avoir une capacité de quelques centaines de microfarads. Ce condensateur tampon est optionnel si aucune itération du fonctionnement forcé ne coïncide avec les périodes d'activité de la charge intermittente, et si le pic de courant appelé par la charge n'excède pas celui que peut fournir la batterie seule. Il peut également être remplacé par toute source d'énergie ayant les mêmes fonctions.

La valeur du courant de décharge maximal, la durée et la périodicité du fonctionnement forcé seront choisies par l'homme de l'art en fonction des performances désirées du système de protection de la batterie.

## Revendications

1. Procédé de protection d'une batterie en couches minces reliée à une charge à fonctionnement intermittent (12) comprenant les étapes suivantes :
avec une charge commutable (16) et pendant un fonctionnement forcé, faire fonctionner périodiquement la batterie (11) à son courant de décharge maximal, et
déconnecter la batterie (11) si la tension à ses bornes, alors qu'elle fonctionne à son courant de décharge maximal, atteint une valeur de seuil (V_{TH2}) légèrement supérieure à sa tension critique (V_{C2}) pour ledit courant de décharge maximal.

2. Procédé selon la revendication précédente, dans lequel le fonctionnement forcé de la charge commutable (16) présente un rapport cyclique inférieur à 0,1 %.

3. Procédé selon la revendication 1 ou 2, dans lequel la durée du fonctionnement forcé est inférieure à 10 ms.

4. Procédé selon l'une quelconque des revendications 1 à 3, dans lequel la période du fonctionnement périodique avec laquelle la batterie est en fonctionnement forcé est inférieure à 10 minutes.

5. Dispositif de protection d'une batterie en couches minces reliée à une charge à fonctionnement intermittent (12) comprenant :
une charge commutable (16) apte à faire fonctionner périodiquement la batterie (11) à son courant de décharge maximal, et
un comparateur de tension (13) adapté à comparer la tension aux bornes de la batterie, alors qu'elle fonctionne à son courant de décharge maximal, à une valeur de seuil (V_{TH2}) légèrement supérieure à la tension critique (V_{C2}) de la batterie pour ledit courant de décharge maximal.

6. Dispositif selon la revendication 5, dans lequel la charge commutable (16) est commandée par des premiers moyens de commutation (SW2) dont le rapport cyclique est inférieur à 0,1 %.

7. Dispositif selon la revendication 6, dans lequel les premiers moyens de commutation sont adaptés à former un signal en créneaux de largeur inférieure à 10 ms.

8. Dispositif selon la revendication 6 ou 7, dans lequel les premiers moyens de commutation sont adaptés à former un signal dont la période est inférieure à 10 minutes.

9. Dispositif selon la revendication 5, comprenant un condensateur tampon (17) en parallèle sur la charge intermittente (12).

10. Dispositif selon la revendication 9, comprenant des deuxièmes moyens de commutation (SW3) disposés entre l'ensemble comprenant la batterie (11) et la charge commutable (16) et l'ensemble comprenant le condensateur tampon (17) et la charge intermittente (12).

11. Dispositif selon l'une quelconque des revendications 5 à 10, dans lequel la charge (16) commutable est une source de courant.

## Patentansprüche

1. Verfahren zum Schutz einer Dünnschichtbatterie, die mit einer Last (12) mit einem intermittierenden Betrieb verbunden ist, wobei das Verfahren die folgenden Schritte aufweist:
mit einer schaltbaren Last (16) und während eines Zwangsbetriebs,
periodisches Betreiben der Batterie (11) mit ihrem maximalen Entladestrom, und
Trennen der Batterie (11) wenn die Spannung über ihre Anschlüsse, während die Batterie mit ihrem maximalen Entladestrom betrieben wird, einen Schwellenwert (V_{TH2}) erreicht, der etwas größer ist als ihre kritische Spannung (V_{C2}) für den maximalen Entladungsstrom.

2. Verfahren nach dem vorhergehenden Anspruch, wobei der Zwangsbetrieb der schaltbaren Last (16) ein Tastverhältnis von weniger als 0,1% aufweist.

3. Verfahren nach Anspruch 1 oder 2, wobei die Dauer des Zwangsbetriebs kürzer als 10 ms ist.

4. Verfahren nach einem der Ansprüche 1 bis 3, wobei die Periode des periodischen Betriebs, in dem die Batterie im Zwangsbetrieb ist, kürzer als 10 Minuten ist.

5. Vorrichtung zum Schutz einer Dünnschichtbatterie, die mit einer Last (12) mit einem intermittierenden Betrieb verbunden ist, wobei die Vorrichtung folgendes aufweist:
eine schaltbaren Last (16), die geeignet ist zum periodischen Betreiben der Batterie (11) mit ihrem maximalen Entladestrom, und
einen Spannungskomparator (13) der geeignet ist zum Vergleichen der Spannung über die Anschlüsse der Batterie, während die Batterie mit ihrem maximalen Entladestrom betrieben wird, mit einem Schwellenwert (V_{TH2}) zu vergleichen, der etwas größer ist als die kritische Spannung (V_{C2}) der Batterie für den maximalen Entladungsstrom.

6. Vorrichtung nach Anspruch 5, wobei die schaltbare Last (16) durch eine erste Schalteinrichtung (SW2) mit einem Tastverhältnis von weniger als 0,1% gesteuert wird.

7. Vorrichtung nach Anspruch 6, wobei die erste Schalteinrichtung geeignet ist ein Signal aus Rechteckimpulsen mit einer Breite von weniger als 10 ms zu bilden.

8. Vorrichtung nach Anspruch 6 oder 7, wobei die ersten Schaltmittel geeignet sind, ein Signal mit einer Periode von weniger als 10 Minuten zu bilden.

9. Vorrichtung nach Anspruch 5, die einen Pufferkondensator (17) parallel zur intermittierenden Last (12) aufweist.

10. Vorrichtung nach Anspruch 9, die ferner eine zweite Schalteinrichtung (SW3) aufweist, die zwischen der Anordnung aus der Batterie (11) und der schaltbaren Last (16) und der Anordnung aus Pufferkondensator (17) und intermittierender Last (12) angeordnet ist.

11. Vorrichtung nach einem der Ansprüche 5 bis 10, wobei die schaltbare Last (16) eine Stromquelle ist.

## Claims

1. A method for protecting a thin-layer battery connected to a load (12) having an intermittent operation comprising the steps of:
with a switchable load (16) and during a forced operation,
periodically operating the battery (11) at its maximum discharge current, and
disconnecting the battery (11) if the voltage across it, while the battery operates at its maximal discharge current, reaches a threshold value (V_{TH2}) slightly greater than its critical voltage (V_{C2}) for said maximum discharge current.

2. The method of the foregoing claim, wherein the forced operation of the switchable load (16) has a duty cycle smaller than 0.1%.

3. The method of claim 1 or 2, wherein the duration of the forced operation is shorter than 10 ms.

4. The method of any of claims 1 to 3, wherein the period of the periodic operation with which the battery is in forced operation is shorter than 10 minutes.

5. A device for protecting a thin-layer battery connected to a load (12) having an intermittent operation comprising:
a switchable load (16) capable of periodically operating the battery (11) at its maximum discharge current, and
a voltage comparator (13) capable of comparing the voltage across the battery, while the battery operates at its maximal discharge current, with a threshold value (V_{TH2}) slightly greater than the critical voltage (V_{C2}) of the battery for said maximum discharge current.

6. The device of claim 5, wherein the switchable load (16) is controlled by first switching means (SW2) having a duty cycle smaller than 0.1 %.

7. The device of claim 6, wherein the first switching means are capable of forming a signal formed of square pulses having a width smaller than 10 ms.

8. The device of claim 6 or 7, wherein the first switching means are capable of forming a signal having a period shorter than 10 minutes.

9. The device of claim 5, comprising a buffer capacitor (17) in parallel on the intermittent load (12).

10. The device of claim 9, comprising second switching means (SW3) arranged between the assembly comprised of the battery (11) and of the switchable load (16) and the assembly comprised of the buffer capacitor (17) and of the intermittent load (12).

11. The device of any of claims 5 to 10, wherein the switchable load (16) is a current source.
